(19) Europäisches Patentamt / European Patent Office / Office européen des brevets

(11) **EP 4 101 065 B1**

(12) **FASCICULE DE BREVET EUROPEEN**

(45) Date de publication et mention de la délivrance du brevet:
**17.04.2024 Bulletin 2024/16**

(21) Numéro de dépôt: **21701560.1**

(22) Date de dépôt: **01.02.2021**

(51) Classification Internationale des Brevets (IPC):
**H02P 21/14** *(2016.01)* **H02P 21/20** *(2016.01)*

(52) Classification Coopérative des Brevets (CPC):
**H02P 21/141; H02P 21/20;** Y02T 10/64

(86) Numéro de dépôt international:
**PCT/EP2021/052300**

(87) Numéro de publication internationale:
**WO 2021/156202 (12.08.2021 Gazette 2021/32)**

(54) **PROCÉDÉ D'ESTIMATION DU COUPLE ÉLECTROMAGNÉTIQUE D'UNE MACHINE ÉLECTRIQUE SYNCHRONE**

VERFAHREN ZUR SCHÄTZUNG DES ELEKTOMAGNETISCHEN DREHMOMENTS EINER ELEKTRISCHEN SYNCHRONMASCHINE

METHOD FOR ESTIMATING THE ELECTOMAGNETIC TORQUE OF A SYNCHRONOUS ELECTRIC MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.02.2020 FR 2001076**

(43) Date de publication de la demande:
**14.12.2022 Bulletin 2022/50**

(73) Titulaire: **Ampere SAS**
**92100 Boulogne-Billancourt (FR)**

(72) Inventeurs:
- **GHANES, Malek**
  **44300 Nantes (FR)**
- **HAMIDA, Mohamed**
  **44300 Nantes (FR)**
- **MALOUM, Abdelmalek**
  **94550 Chevilly Larue (FR)**
- **TAHERZADEH, Mehdi**
  **44300 Nantes (FR)**

(56) Documents cités:
**FR-A1- 3 075 515**

- **CHEN WEI ET AL: "Improvement of stator flux observer for a direct torque controlled PMSM drive at low speed", POWER ELECTRONICS AND MOTION CONTROL CONFERENCE (IPEMC), 2012 7TH INTERNATIONAL, IEEE, 2 juin 2012 (2012-06-02), pages 2462-2466, XP032216072, DOI: 10.1109/IPEMC.2012.6259243 ISBN: 978-1-4577-2085-7**
- **ZHANG YUEMING ET AL: "Sensorless Control of Permanent Magnet Synchronous Motor with Optimized Performance at Low Speed", 2019 22ND INTERNATIONAL CONFERENCE ON ELECTRICAL MACHINES AND SYSTEMS (ICEMS), IEEE, 11 août 2019 (2019-08-11), pages 1-5, XP033643607, DOI: 10.1109/ICEMS.2019.8922017**

**Description**

L'invention concerne un procédé d'estimation du couple électromagnétique d'une machine électrique synchrone triphasée et, en particulier, d'une machine électrique synchrone triphasée à aimants permanents (MSAP).

L'invention trouve une application avantageuse dans le domaine des véhicules automobiles électriques hybrides et électriques, dans lesquels ce type de machine est largement utilisé comme moteur de traction, en mode de traction électrique du véhicule, notamment en raison de sa robustesse, de sa simplicité et de son faible coût de maintenance.

Dans un véhicule automobile à traction électrique, la connaissance de la valeur réelle du couple moteur fourni par la machine électrique est nécessaire, en particulier pour des raisons de sécurité et/ou de contrôle. En général, le couple mécanique d'entraînement de la machine est obtenu à partir d'un couplemètre, qui mesure le couple sur l'arbre. Pour plusieurs raisons telles que le coût, la fiabilité et l'encombrement, il est toutefois préférable d'éliminer le couplemètre du système d'entraînement et de le remplacer par un estimateur de couple.

Un estimateur de couple est conçu pour estimer la valeur réelle du couple fourni par la machine électrique en utilisant certaines variables disponibles telles que les tensions, les courants et la position du rotor.

Classiquement, les machines électriques peuvent être représentées grâce à deux modèles diphasés, respectivement en utilisant la transformée de Clarke, qui s'appui sur un repère diphasé fixe lié au stator, et la transformée de Park, qui s'appui sur un repère diphasé tournant lié au rotor. Les grandeurs ainsi transformées dans les repères liés au stator et au rotor s'expriment en utilisant les indices $\alpha$, $\beta$ d'une part, et d, q, d'autre part, correspondant respectivement aux deux axes dans le repère diphasé fixe et aux deux axes dans le repère diphasé tournant.

En raison de la forte relation entre le flux magnétique de la machine et le couple fourni, le couple de la machine peut être observé à travers une estimation du flux de la machine. On connaît à l'heure actuelle plusieurs techniques d'estimation du flux d'une machine électrique synchrone triphasée à aimants permanents à partir des tensions et des courants diphasés. Ces techniques sont classées en deux catégories, respectivement basées sur un modèle de tension et sur un modèle de courant.

Concernant les techniques d'estimation du flux basées sur le modèle de tension, la force électromotrice est calculée en utilisant les tensions et les courants mesurés dans le repère lié au stator. Ensuite, le flux du stator est obtenu en calculant l'intégrale de la force électromotrice.

Toutefois, cette méthode d'estimation implique de connaître précisément les conditions magnétiques initiales (flux de l'aimant permanent et des inductances statoriques), ce qui n'est pas toujours le cas en réalité. Aussi, du fait de cette incertitude, il peut en résulter un décalage dans l'estimation de l'amplitude du flux par rapport au flux réel de la machine. Ce décalage dans l'estimation du flux à l'aide du modèle tension-flux génère alors un terme oscillant sur le couple estimé.

De surcroît, les problèmes de démagnétisation et de saturation magnétique susceptibles d'apparaître en cours de fonctionnement de la machine, génèrent également un terme oscillant sur le couple estimé à l'aide du modèle tension-flux de la machine.

Une autre source de divergence du couple ainsi estimé réside dans la non linéarité de l'onduleur à travers lequel est alimentée la machine et/ou dans les incertitudes de mesure, qui génèrent un décalage sur la valeur de la force électromotrice calculée et partant, sur la valeur du flux estimé.

Un autre problème à résoudre est d'assurer une observabilité à basse vitesse ou à vitesse nulle.

Le problème d'observabilité à basse vitesse survient lorsque certains filtres sont ajoutés pour résoudre les problèmes ci-dessus (condition magnétique inconnue et décalage dans force électromotrice).

Dans l'état de la technique, on connaît les documents suivants qui concernent l'estimation du flux basée sur le modèle de tension.

Le document CHEN WEI ET AL: "Improvement of stator flux observer for a direct torque controlled PMSM drive at low speed",POWER ELECTRONICS AND MOTION CONTROL CONFERENCE (IPEMC), 2012 7TH INTERNATIONAL, IEEE, 2 juin 2012 (2012-06-02), pages 2462-2466, XP032216072,DOI: 10.1109/IPEMC.2012.6259243ISBN: 978-1-4577-2085-7 décrit un procédé d'estimation du couple électromagnétique d'une machine électrique synchrone triphasée à aimants permanents suivant le préambule de la revendication 1 et le dispositif correspondant suivant le préambule de la revendication 9.

Le document US9985564B2 décrit un procédé pour estimer le flux statorique d'une machine électrique synchrone triphasée à aimants permanents, basé sur le modèle de tension dans le repère diphasé $\alpha,\beta$. Au lieu d'utiliser un intégrateur pur pour intégrer la force électromotrice, il propose d'utiliser un filtre passe-bas pour force électromotrice, puis d'ajouter un compensateur pour corriger les changements de gain et de phase crées par le filtre.

Le document CN103346726A propose également d'estimer le flux d'une machine électrique synchrone triphasée à aimants permanents, à partir de la force électromotrice. Il propose d'utiliser un filtre de second ordre au lieu d'un intégrateur pur. Il propose également d'estimer l'inductance de l'axe q dans le repère diphasé pour améliorer l'estimation avec le modèle de tension.

Le document US7098623B2 décrit une méthode pour estimer la position du rotor en estimant les flux statoriques avec le modèle de tension dans le repère diphasé d,q. Il propose une observation adaptative du flux basée sur l'injection de signaux haute fréquence à basse vitesse.

Le document EP1513250 décrit une méthode de combinaison des méthodes d'estimation du flux par modèle de tension et l'injection de signaux haute fréquence pour estimer la position.

Concernant les méthodes basées sur le modèle de courant, le flux est estimé en utilisant les courants, de préférence dans le repère lié au rotor. Ces méthodes basées sur le modèle de courant permettent de pallier les limitations évoquées ci-dessus liées aux méthodes basées sur le modèle de tension, car elles n'impliquent pas d'utiliser d'intégrateurs en boucle ouverte. Cependant, les problèmes à résoudre à l'égard de ces méthodes concernent les variations des inductances à cause de la saturation magnétique, les incertitudes du flux d'aimant permanent et la nécessité d'un capteur de position.

Dans l'état de la technique, on connaît les documents suivants se rapportant à l'estimation du flux basée sur le modèle de courant.

Le document US7774148B2 décrit une méthode d'estimation du couple d'une machine électrique synchrone triphasée à aimants permanents, basée sur une estimation de flux en utilisant le modèle de courant. Les flux des axes d et q sont représentés par deux fonctions des courants non linéaires.

Le document CN103872951A décrit un estimateur de couple d'une machine électrique synchrone triphasée à aimants permanents, basé sur une estimation de flux avec un observateur par mode glissant appliqué sur un modèle de tension combiné avec un modèle de courant.

Le document JP2004166408A décrit un estimateur adaptatif de flux pour une machine électrique synchrone triphasée à aimants permanents, basé sur le modèle de tension avec un terme de correction basé sur le modèle de courant.

Dans ce contexte, la présente invention a pour but de proposer un procédé d'estimation du couple d'une machine électrique, en particulier d'une machine électrique synchrone à aimants permanents pour véhicule automobile électrique ou hybride, qui soit robuste à l'égard des limitations précédemment évoquées.

A cette fin, l'invention concerne un procédé d'estimation du couple électromagnétique d'une machine électrique synchrone triphasée à aimants permanents pour véhicule automobile électrique ou hybride, le procédé comprenant des étapes de :

- mesurer les courants et tensions au niveau des phases du stator de la machine dans un repère triphasé fixe lié au stator,
- déterminer les courants et tensions dans un repère diphasé fixe lié au stator en fonction des mesures de courant et de tension dans le repère triphasé,
- calculer une première estimation du flux de la machine par le calcul de l'intégrale de la force électromotrice, la force électromotrice étant calculée à partir des tensions et courants exprimés dans le repère diphasé fixe lié au stator,
- estimer le couple électromagnétique à partir du flux estimé par la première estimation,

ledit procédé étant caractérisé en ce qu'il comprend des étapes de :

- déterminer les courants et tensions dans un repère diphasé tournant lié au rotor en fonction des courants et tensions exprimés dans le repère diphasé fixe et de la position du rotor par rapport au stator,
- calculer en parallèle une seconde estimation du flux de la machine en utilisant les courants exprimés dans le repère diphasé tournant lié au rotor, ladite seconde estimation de flux étant corrigée par l'introduction de variables caractérisant des incertitudes magnétiques de la machine, lesdites variables étant déterminées par un observateur fonction des courants et des tensions statoriques exprimés dans le repère diphasé tournant lié au rotor,
- comparer le couple estimé et un couple de consigne et
- réinitialiser les conditions initiales du flux selon la première estimation à partir du flux estimé par la seconde estimation lorsque l'écart entre le couple estimé et le couple de consigne dépasse un seuil prédéfini.

Avantageusement, le procédé peut comprendre une étape de désactiver le calcul de ladite seconde estimation de flux lorsque l'écart entre le couple estimé et le couple de consigne est inférieur ou égal audit seuil.

Avantageusement, le procédé peut comprendre une étape de déterminer un pourcentage de temps pendant lequel le calcul de ladite seconde estimation de flux est activé par rapport au temps de fonctionnement de la machine.

Avantageusement, le procédé peut comprendre une étape de compenser un décalage de la force électromotrice calculée avant son utilisation dans ladite première estimation du flux.

Avantageusement, ladite seconde estimation du flux de la machine comprend des étapes de :

- déterminer un modèle flux-courant de la machine, prenant en compte des fonctions de saturation de la machine, de façon à considérer dans le modèle des variations de paramètres magnétiques de la machine causées par la saturation magnétique et la démagnétisation de la machine,
- introduire dans le modèle lesdites variables caractérisant les incertitudes magnétiques de la machine, inhérentes aux variations des paramètres magnétiques de la machine,
- estimer lesdites variables dans le modèle par ledit observateur,
- calculer ladite seconde estimation du flux à partir desdites variables estimées.

Avantageusement, les paramètres magnétiques considérés sont les inductances linéaires du stator sur chaque axe respectivement du repère diphasé tournant lié au rotor et le flux magnétique généré par les aimants permanents du rotor de la machine.

Avantageusement, les fonctions de saturation représentent la saturation magnétique et la saturation croisée dans la machine.

Avantageusement, le procédé comprend une étape de régler l'observateur par un algorithme de type Kalman.

L'invention concerne également un dispositif d'estimation du couple électromagnétique d'une machine électrique synchrone triphasée à aimants permanents pour un véhicule automobile électrique ou hybride, ledit dispositif étant adapté pour recevoir des courants et tensions mesurés au niveau des phases du du stator de la machine dans un repère triphasé fixe lié au stator, transformés dans un repère diphasé fixe lié au stator, ledit dispositif comprenant :

- un premier estimateur du flux de la machine dans le repère diphasé fixe lié au stator, comprenant deux intégrateur de la force électromotrice pour estimer les composantes respectives du flux selon les deux axes direct et en quadrature du repère diphasé fixe lié au stator, ladite force électromotrice étant calculée à partir des courants et tensions appliqués sur chaque axe du repère diphasé fixe lié au stator,
- un estimateur de couple, adapté pour estimer le couple de la machine à partir desdites composantes respectives du flux estimé dans les deux axes du repère diphasé fixe lié au stator,

ledit dispositif étant caractérisé en ce qu'il comprend :

- un second estimateur du flux, adapté pour recevoir les courants et tensions exprimés dans le repère diphasé fixe, transformés dans un repère diphasé tournant lié au rotor en fonction de la position du rotor par rapport au stator, ledit second estimateur de flux étant adapté pour estimer le flux en utilisant les courants exprimés dans le repère diphasé tournant lié au rotor, ledit second estimateur comprenant un observateur fonction des courants et des tensions statoriques exprimés dans le repère diphasé tournant lié au rotor, adapté pour déterminer des variables caractérisant des incertitudes magnétiques de la machine, lesdites variables étant utilisées pour corriger l'estimation de flux dudit second estimateur, et
- un détecteur adapté pour comparer le couple estimé par l'estimateur de couple avec un couple de consigne et pour générer un signal apte à commander la réinitialisation des conditions initiales du flux des deux intégrateurs dudit premier estimateur de flux, lorsque l'écart entre le couple estimé et le couple de consigne est supérieur à un seuil prédéfini, lesdites conditions initiales étant réinitialisées à partir de l'estimation de flux fournie par le second estimateur de flux.

Avantageusement, ledit signal est apte à désactiver le calcul de ladite seconde estimation de flux par le second estimateur de flux, lorsque l'écart entre le couple estimé et le couple de consigne est inférieur ou égal audit seuil.

D'autres caractéristiques et avantages de la présente invention apparaîtront plus clairement à la lecture de la description suivante donnée à titre d'exemple illustratif et non limitatif et faite en référence à la figure unique suivante :

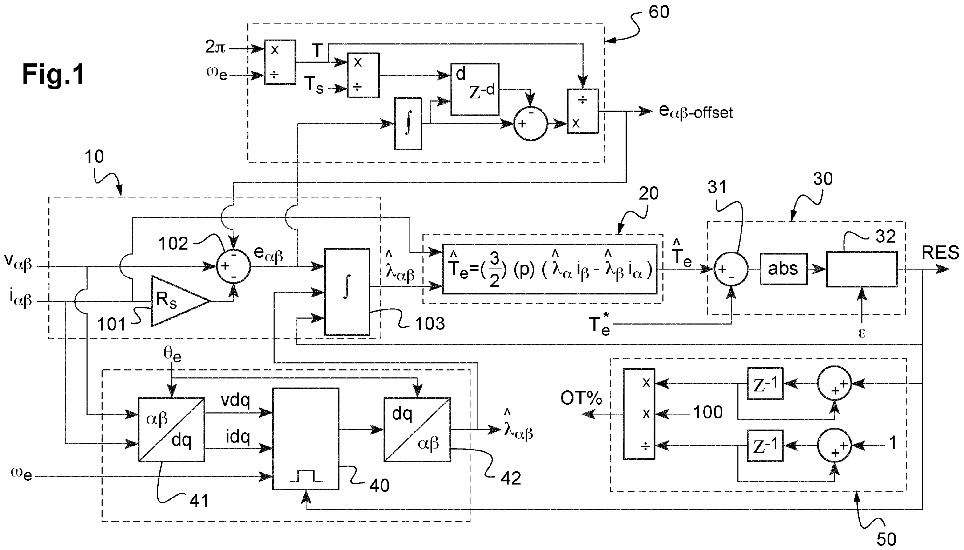

[Fig. 1] est un schéma bloc fonctionnel d'un dispositif pour la mise en oeuvre du procédé d'estimation du couple électromagnétique selon l'invention.

Dans le cadre de la présente description, on s'intéresse donc plus particulièrement au cas des machines électriques synchrones triphasées à aimants permanents, utilisées dans les applications de véhicules hybrides et électriques.

Dans une première étape, on mesure les courants et les tensions pour chacune des trois phases du stator de la machine synchrone triphasée à aimants permanents.

Puis, on applique la transformée de Park aux grandeurs mesurées relatives aux trois phases de manière à obtenir une composante directe $i_d$ et une composante quadratique $i_q$ de courant, ainsi qu'une composante directe $v_d$ et une composante quadratique $v_q$ de tension.

Il est ainsi possible de transposer les trois courants et les trois tensions sinusoïdaux du stator relatives aux trois phases du système triphasé dans un espace où les trois signaux sinusoïdaux de courant et de tension s'expriment sous la forme de deux signaux constants de courant et de tension, respectivement une composante sur l'axe direct et une composante sur l'axe en quadrature q. Pour cela, le repère de Park s'appui sur un repère lié au rotor.

L'estimateur de couple qui va être décrit dans ce contexte est basé sur l'estimation de flux de la machine, effectuée à partir d'un modèle tension-flux amélioré de la machine.

L'estimation du couple électromagnétique de la machine, notée $\hat{T}_e$, est fournie par l'expression suivante (1) :

$$\hat{T}_e = (\frac{3}{2})(p)(\hat{\lambda}_\alpha i_\beta - \hat{\lambda}_\beta i_\alpha) \qquad (1)$$

où :

- $i_\alpha$ et $i_\beta$ sont les composantes respectivement directe et en quadrature du courant statorique dans le domaine de Clarke, $\alpha$ se référant à l'axe direct et $\beta$ à l'axe en quadrature du domaine de Clarke,
- $\lambda_\alpha$ et $\lambda_\beta$ sont les composantes respectivement directe et en quadrature du flux total vu du stator dans le domaine de Clarke,
- $p$ est le nombre de paires de pôles de la machine.

Le flux total vu du stator d'une machine électrique synchrone à aimants permanents peut être estimé en calculant l'intégrale de la force électromotrice selon l'ensemble suivant d'équations (2) :

$$\hat{\lambda}_\alpha = \int(v_\alpha - R_s i_\alpha) \ dt + \hat{\lambda}_\alpha(0) \qquad (2)$$

$$\hat{\lambda}_\beta = \int(v_\beta - R_s i_\beta) \ dt + \hat{\lambda}_\beta(0) \qquad (2)$$

où Rs est la résistance du stator, $v_\alpha$ et $v_\beta$ représentent respectivement les composantes directe et en quadrature de la tension statorique dans le domaine de Clarke, et $\hat{\lambda}\alpha(0)$ et $\hat{\lambda}_\beta(0)$ représentent les conditions initiales du flux selon respectivement les composantes directe et en quadrature dans le domaine de Clarke.

Comme il va être expliqué plus en détail par la suite, pour surmonter les problèmes d'estimation du flux par le modèle de tension de la machine, l'invention propose une amélioration de ce modèle en le combinant avec un modèle de courant modifié pour réinitialiser les conditions initiales $\hat{\lambda}_\alpha(0)$ et $\hat{\lambda}_\beta(0)$ des intégrateurs.

Plus précisément, ces conditions initiales du flux sont déterminées en utilisant le modèle de courant et un observateur approprié, conçu pour estimer les incertitudes magnétiques du modèle, dues à la saturation magnétique et à la démagnétisation.

En effet, la relation entre flux et courant de phase statorique est linéaire pour des faibles niveaux de courant. Toutefois, pour des courants plus élevés, cette linéarité n'est plus maintenue ; ce qui induit généralement un fonctionnement saturé. De plus, le fonctionnement à température élevée de la machine provoque des variations du flux d'aimant permanent (démagnétisation). Ainsi, les inductances et le flux magnétique des aimants permanents de la machine varient fortement d'une manière prédictible à cause de la saturation magnétique et de la démagnétisation de la machine. Aussi, on propose d'adopter un modèle flux-courant modifié, qui prend en compte ces variations, de sorte à améliorer le comportement du modèle.

Pour ce faire, nous allons considérer des conditions magnétiques inconnues de la machine dans le modèle de courant. Les conditions magnétiques inconnues que l'on considère sont les inductances linéaires du stator, le flux magnétique des aimants permanents et les fonctions de saturation de la machine, qui représentent la saturation magnétique et la saturation croisée dans la machine.

La prise en considération dans le modèle de ces conditions magnétiques inconnues de la machine se traduit, dans l'espace de Park, par le système d'équations suivant :

$$\begin{cases} \frac{d\varphi_d}{dt} = v_d - R_s i_d + \omega_e \varphi_q \\ \frac{d\varphi_q}{dt} = v_q - R_s i_q - \omega_e \varphi_d - \omega_e \phi_f - \omega_e \Delta\phi_f \end{cases} \qquad (3)$$

$$\begin{cases} i_d = (\frac{1}{L_{d0}} + \Delta L_{d0}^{-1})\varphi_d + f_{1sat}(\varphi_d, \varphi_q) + \Delta f_{1sat} \\ i_q = (\frac{1}{L_{q0}} + \Delta L_{q0}^{-1})\varphi_q + f_{2sat}(\varphi_d, \varphi_q) + \Delta f_{2sat} \end{cases} \qquad (4)$$

Avec $\varphi_d$ et $\varphi_q$ les composantes du flux statorique généré sur les axes respectivement direct d et en quadrature q du plan de Park de la machine, $v_d$ et $v_q$ les tensions appliquées sur les deux axes respectivement direct d et en quadrature q du plan de Park de la machine, $i_d$ et $i_q$ les courants circulant dans la machine sur les deux axes respectivement direct d et en quadrature q du plan de Park de la machine, $R_S$ la résistance équivalente du stator de la machine, $L_{d0}$ et $L_{q0}$ les inductances linéaires du stator sur chaque axe respectivement direct d et en quadrature q du plan de Park de la machine, $\phi_f$ le flux magnétique généré par les aimants permanents du rotor et $\omega_e$ la vitesse angulaire du rotor.

$f_{sat(1,2)}$ sont des fonctions qui représentent la saturation magnétique et la saturation croisée dans la machine.

Et :

$$\begin{cases} \Delta \phi_f = \phi_{fm} - \phi_f \\ \Delta L_{d0}^{-1} = \dfrac{1}{L_{d0m}} - \dfrac{1}{L_{d0}} \\ \Delta L_{q0}^{-1} = \dfrac{1}{L_{q0m}} - \dfrac{1}{L_{q0}} \\ \Delta f_{sat(1,2)} = f_{sat(1,2)m} - f_{sat(1,2)} \end{cases} \qquad (5)$$

Avec $L_{d0m}$ et $L_{q0m}$ les valeurs exactes des coefficients linéaires entre flux et courants statoriques sur chaque axe respectivement direct d et en quadrature q du plan de Park de la machine, $\phi_{fm}$ la valeur réelle du flux magnétique généré par les aimants permanents du rotor, et $f_{sat(1,2)m}$ les fonctions respectives de saturation réelle de la machine.

Ainsi, les paramètres $\Delta L_{d0}^{-1}$, $\Delta L_{q0}^{-1}$, $\Delta \phi_f$ et $\Delta f_{sat(1,2)}$ représentent les écarts entre les valeurs réelles et les valeurs de référence de ces paramètres dans le modèle proposé par les équations (3) et (4).

On introduit alors deux variables $g_1$ et $g_2$ dans le modèle de courant, qui correspondent aux conditions magnétiques inconnues mentionnées. Pour ce faire, en considérant d'abord les courants de stator $i_d$ et $i_q$ comme variables d'état, on remplace l'équation (3) dans l'équation (4) et on obtient :

$$\begin{cases} \dfrac{di_d}{dt} = -\dfrac{R_s}{L_{d0}}i_d + \dfrac{\omega_e L_{q0}}{L_{d0}}i_q - \dfrac{\omega_e L_{q0}}{L_{d0}}g_2 + \dfrac{1}{L_{d0}}v_d + \dfrac{dg_1}{dt} \\ \dfrac{di_q}{dt} = \dfrac{\omega_e L_{d0}}{L_{q0}}i_d - \dfrac{R_s}{L_{q0}}i_q + \dfrac{\omega_e L_{d0}}{L_{q0}}g_1 - \dfrac{\omega_e \phi_f}{L_{q0}} + \dfrac{1}{L_{q0}}v_q + \dfrac{dg_2}{dt} \end{cases} \qquad (6)$$

Avec :

$$\begin{cases} g_1 = \Delta L_{d0}^{-1}\varphi_d + f_{1sat}\left(\varphi_d, \varphi_q\right) + \Delta f_{1sat} - \dfrac{\Delta \phi_f}{L_{d0}} \\ g_2 = \Delta L_{q0}^{-1}\varphi_q + f_{2sat}\left(\varphi_d, \varphi_q\right) + \Delta f_{2sat} \end{cases} \qquad (7)$$

Ainsi, les variables $g_1$ et $g_2$ regroupent toutes incertitudes magnétiques de la machine, telles qu'elles résultent des variations des inductances à cause de la saturation magnétique et des incertitudes du flux d'aimant permanent. Autrement dit, les variables $g_1$ et $g_2$, que nous allons observer, permettent de représenter le comportement magnétique de la machine, qui varie à cause de la saturation magnétique. L'introduction dans le modèle de courant des incertitudes paramétriques, décrites par les variables $g_1$ et $g_2$, permet de traduire le fait que la valeur des paramètres magnétiques du système (inductance et flux d'aimant permanent) peut différer de la modélisation à cause de la saturation et la démagnétisation de la machine. L'observation de ces variables, comme il va être décrit ci-après, va permettre de corriger ces incertitudes.

On va ainsi estimer ces variables présentées dans le modèle en utilisant un observateur approprié. On se base donc sur le modèle flux-courant de la machine décrit ci-dessus, qui prend en compte les variations, causées par la saturation magnétique et la démagnétisation de la machine, des paramètres magnétiques de la machine que sont les inductances et le flux d'aimant permanent, et sur la théorie d'observateur, qui comprend les notions d'observabilité et d'observateur d'état. Ainsi, lorsque l'état d'un système n'est pas mesurable, on conçoit un observateur qui permet de reconstruire cet état à partir d'un modèle du système et de mesures d'autres états. On entend par état un ensemble de valeurs physiques définissant le système observé. On utilisera ici un observateur de type Kalman pour observer les incertitudes magnétiques de la machine telles que caractérisées par les variables $g_1$ et $g_2$.

Aussi, on considère les variables $g_1$ et $g_2$ comme deux nouvelles variables d'état. Dans ce modèle, $g_1$ et $g_2$ sont supposées être des fonctions constantes par morceaux, c'est-à-dire des fonctions dont les valeurs sont constantes sur des intervalles. Le système d'équations modélisant la machine électrique peut être reformulé sous la forme générale des systèmes non linéaires :

$$\frac{dx}{dt} = f(x, u)$$

$$y = h(x)$$

avec :

$$x = \begin{bmatrix} i_d \\ i_q \\ g_1 \\ g_2 \end{bmatrix},$$

$$u = \begin{bmatrix} v_d \\ v_q \end{bmatrix},$$

et

$$y = \begin{bmatrix} i_d \\ i_q \end{bmatrix} = h(x) = C.x = \begin{bmatrix} 1 & 0 & 0 & 0 \\ 0 & 1 & 0 & 0 \end{bmatrix} x$$

Pour le système ainsi modélisé, on peut formaliser un observateur par l'équation suivante :

$$\frac{d}{dt}\begin{bmatrix} \hat{i}_d \\ \hat{i}_q \\ \hat{g}_1 \\ \hat{g}_2 \end{bmatrix} = \underbrace{\begin{bmatrix} -\dfrac{R_s}{L_{d0}} & \dfrac{\omega_e L_{q0}}{L_{d0}} & 0 & -\dfrac{\omega_e L_{q0}}{L_{d0}} \\ -\dfrac{\omega_e L_d}{L_{q0}} & -\dfrac{R_s}{L_{q0}} & \dfrac{\omega_e L_{d0}}{L_{q0}} & 0 \\ 0 & 0 & 0 & 0 \\ 0 & 0 & 0 & 0 \end{bmatrix}}_{A} \underbrace{\begin{bmatrix} \hat{i}_d \\ \hat{i}_q \\ \hat{g}_1 \\ \hat{g}_2 \end{bmatrix}}_{\hat{x}} + \underbrace{\begin{bmatrix} \dfrac{1}{L_d} & 0 \\ 0 & \dfrac{1}{L_q} \\ 0 & 0 \\ 0 & 0 \end{bmatrix}}_{B} \underbrace{\begin{bmatrix} v_d \\ v_q \end{bmatrix}}_{u} + \underbrace{\begin{bmatrix} 0 \\ -\dfrac{\omega_e \phi_{f0}}{L_q} \\ 0 \\ 0 \end{bmatrix}}_{v} + K\left( \begin{bmatrix} i_d \\ i_q \end{bmatrix} - \begin{bmatrix} 1 & 0 & 0 & 0 \\ 0 & 1 & 0 & 0 \end{bmatrix} \begin{bmatrix} \hat{i}_d \\ \hat{i}_q \\ \hat{g}_1 \\ \hat{g}_2 \end{bmatrix} \right) \quad (8)$$

Avec $\hat{x}$ : le vecteur des états estimés correspondant au vecteur d'état :

$$x = \begin{bmatrix} i_d \\ i_q \\ g_1 \\ g_2 \end{bmatrix}$$

et K : le gain de l'observateur.

Le choix du gain K, qui multiplie le terme d'erreur permet de régler l'observateur. Ce gain est calculé par l'algorithme de type Kalman.

La vitesse angulaire électrique du rotor est considérée comme une entrée pour le système matriciel A. Cela permet l'observation de l'état. On utilise donc un gain d'observateur K variant dans le temps comme :

$$K = P^{-1}C^T R^{-1} \tag{9}$$

où la dynamique de la variable P est définie comme suit :

$$\frac{dP}{dt} = -A^T P - PA - PQP + C^T R^{-1} C \tag{10}$$

Les matrices Q et R sont des matrices de pondération symétriques définies positives.

Ainsi, après avoir estimé les deux variables $g_1$ et $g_2$ à l'aide de l'observateur, les flux statoriques globaux peuvent être estimés sur la base des équations (4) et (7) définies ci-dessus :

$$\begin{cases} \hat{\lambda}_d = \phi_{f0} + \Delta\phi_f + \hat{\varphi}_d = \phi_f + L_{d0}\left(i_d - \hat{g}_1\right) \\ \hat{\lambda}_q = \hat{\varphi}_q = L_{q0}\left(i_q - \hat{g}_2\right) \end{cases} \tag{11}$$

On a vu que le modèle flux-tension de la machine s'exprimait par l'ensemble d'équations (2) décrit ci-dessus, à partir duquel le flux de la machine peut être estimé en calculant l'intégrale de la force électromotrice. L'estimation du flux statorique par le modèle de tension repose donc sur l'utilisation d'intégrateurs réinitialisables, dans la mesure où, selon l'invention, les conditions initiales du flux pour les intégrateurs sont déterminées par un observateur indépendant, tel que décrit ci-dessus, permettant d'estimer les flux sur la base du modèle de courant modifié, par application de l'ensemble d'équation (11).

On utilise ainsi un premier estimateur basé sur le modèle de tension, mettant en oeuvre deux intégrateurs purs pour estimer les flux dans les deux axes α et β, correspondant aux deux axes dans le repère diphasé fixe, et on utilise parallèlement un autre estimateur de flux basé sur le modèle de courant dans le repère diphasé tournant dq, modifié avec l'observateur pour estimer les conditions initiales de flux pour les deux intégrateurs.

A partir de l'estimation de flux effectuée en utilisant le modèle de tension ainsi amélioré par l'utilisation de l'autre estimateur de flux basé sur le modèle de courant, le couple électromagnétique généré par la machine électrique synchrone à aimants permanents peut alors se calculer par l'application de l'expression (1).

Afin de minimiser le temps de calcul dans le traitement en temps réel, il est proposé d'arrêter le traitement lié à l'observateur lorsqu'il n'est pas nécessaire d'initialiser les intégrateurs. Ainsi, nous proposons un détecteur pour définir le moment de l'initialisation. Ce détecteur compare le couple estimé par le modèle de tension, noté $\hat{T}_e$, avec un couple de consigne, noté $T^*_e$, correspondant au couple à fournir par la machine électrique du véhicule, et donné par le système de contrôle du véhicule notamment à partir de l'enfoncement de la pédale d'accélération par le conducteur. Si la valeur absolue de l'erreur entre le couple de consigne et le couple estimé dépasse un seuil ε prédéfini, l'observateur sera activé et les deux intégrateurs de l'estimateur de flux basé sur le modèle de tension seront réinitialisés sur la base des conditions initiales de flux déterminées par le modèle flux-courant modifié avec l'observateur. Ainsi, nous introduisons un opérateur booléen pour déclencher la réinitialisation des intégrateurs dans le modèle de tension, défini comme ci-dessous :

$$RES = \begin{cases} 1 & \left|\hat{T}_e - T_e^*\right| > \varepsilon \\ 0 & \left|\hat{T}_e - T_e^*\right| \leq \varepsilon \end{cases}$$

L'observateur est activé et désactivé lorsque l'opérateur « RES » passe respectivement à "1" et à "0".

Il peut être intéressant de connaître le pourcentage de temps pendant lequel l'observateur est activé par rapport au temps total de fonctionnement de la machine pour l'entraînement du véhicule. Ainsi, nous introduisons une nouvelle variable de surveillance comme suit :

$$OT\ \% = \frac{\sum\limits_i t_i}{t_{tot}}$$

Où $\Sigma t_i$ est la somme des durées pendant lesquelles l'observateur est activé et $t_{tot}$ est le temps total de fonctionnement. La variable surveillée OT peut varier de 0 à 100% en fonction de la condition initiale inconnue de flux au démarrage, de la qualité de l'aimant, de la condition de saturation du moteur, de la variation du couple de consigne, etc.

Des incertitudes de mesures et/ou la non-linéarité de l'onduleur à travers lequel est alimentée la machine peuvent entraîner un offset (décalage) de la force électromotrice calculée. Aussi, afin de compenser cet offset pour éviter une divergence de la valeur de flux estimé avec le temps, on prévoit de calculer sa valeur moyenne comme suit :

$$e_{\alpha\beta-offset} = \frac{1}{T} \int\limits_{\xi}^{\xi+T} e_{\alpha\beta} dt$$

où T est la période du courant.

$e_{\alpha\beta\text{-offset}}$ représente l'offset dans la force électromotrice calculée. Cette valeur est prévue pour être soustraite de la force électromotrice calculée en ligne avant son utilisation dans les intégrateurs de l'estimateur de flux basé sur le modèle flux- tension.

La figure 1 décrit un schéma bloc du procédé d'estimation du couple électromagnétique de la machine tel qu'il vient d'être décrit ci-dessus.

On recueille tout d'abord les mesures des courants et tensions pour chacune des trois phases du stator de la machine synchrone triphasée à aimants permanents.

On obtient une projection des grandeurs électriques statoriques mesurées relatives aux trois phases sur les deux axes fixes $(\alpha,\beta)$ du repère diphasé fixe respectivement direct et en quadrature, par application de la transformation de Clarke. Ainsi, les composantes de courant et de tension $i_{\alpha\beta}$ et $v_{\alpha\beta}$ appliquées sur les deux axes respectivement direct et en quadrature du domaine de Clarke sont considérées en entrée du dispositif de la figure 1 et sont fournies à un premier estimateur de flux 10, basé sur le modèle de tension.

Le premier estimateur de flux 10 détermine en premier lieu les composantes respectivement directe et en quadrature de la force électromotrice $e_{\alpha\beta}$ sur chacun des deux axes du domaine de Clarke, à partir des composantes $i_{\alpha\beta}$ et $v_{\alpha\beta}$ fournies en entrée et de la résistance du stator Rs.

Ainsi, le premier estimateur de flux 10 comprend, pour chaque composante respectivement directe et en quadrature du domaine de Clarke, un multiplicateur 101, qui multiplie la valeur de la résistance du stator Rs et la composante respective du courant $i_{\alpha\beta}$ pour l'axe considéré, et fournit sa sortie à un sommateur 102 respectif. Pour chaque composante considérée, le sommateur 102 correspondant soustrait alors la sortie du multiplicateur 101 de son entrée sur laquelle est reçue la composante de tension statorique correspondante, et fournit en sortie la composante respective de la force électromotrice $e_{\alpha\beta}$ pour l'axe considéré à un intégrateur 103 respectif. Pour chaque composante considérée, l'intégrateur 103 correspondant calcule l'intégrale de la force électromotrice et fournit en sortie les composantes $\hat{\lambda}_{\alpha\beta}$ respectivement directe et en quadrature, du flux total vu du stator dans le domaine de Clarke.

Ces composantes $\hat{\lambda}_{\alpha\beta}$ respectivement directe et en quadrature du flux total vu du stator dans le domaine de Clark sont fournies à un estimateur de couple 20, qui va calculer le couple électromagnétique fourni par la machine $\hat{T}_e$, par application de l'expression (1) décrite plus haut.

Comme expliqué précédemment, l'estimateur de couple fournit sa sortie $\hat{T}_e$ à un détecteur 30, conçu pour comparer le couple estimé $\hat{T}_e$ par l'estimateur de couple 20 sur la base du modèle de tension, avec le couple de consigne $T^*_e$. Ainsi, le détecteur 30 comprend un sommateur 31, qui soustrait cette valeur de couple de consigne $T^*_e$ à la sortie $\hat{T}_e$ fournie par l'estimateur de couple 20 et fournit sa sortie, en valeur absolue, à un comparateur 32. Ce dernier compare la valeur absolue de l'erreur entre le couple estimé et le couple de consigne au seuil prédéfini $\varepsilon$ et fournit en sortie l'opérateur booléen RES, destiné à commander la réinitialisation des deux intégrateurs 103 du premier estimateur 10 de flux lorsqu'il passe à la valeur « 1 », signifiant que l'écart, en valeur absolue, entre le couple estimé et le couple de consigne est supérieur au seuil prédéfini.

La mise en oeuvre de cette réinitialisation des deux intégrateurs 103 du premier estimateur de flux 10 repose selon l'invention sur l'activation d'un second estimateur de flux 40, basé sur le modèle de courant dans le repère (d,q), modifié avec l'observateur, comme on l'a expliqué précédemment, de façon à corriger le flux estimé en tenant compte des incertitudes magnétiques du modèle de la machine. Le signal RES est donc utilisé pour activer et, préférentiellement, désactiver ce second estimateur de flux 40, lorsqu'il passe respectivement à « 1 » et « 0 ».

Un circuit de transformation de Park 41 effectue la rotation du repère ($\alpha,\beta$) au repère (d,q), en fonction de la position du rotor $\theta_e$ par rapport au stator, qui est détectée par un capteur angulaire de position. Ainsi, la transformation de Clarke des grandeurs électriques statoriques mesurées est suivie par une rotation des axes qui convertit les composantes $i_{\alpha\beta}$ et $v_{\alpha\beta}$ du repère ($\alpha,\beta$) en composantes continues selon les deux axes direct d et quadrature q du plan de Park de la machine.

Ainsi, les composantes de courant et de tension $i_{dq}$ et $v_{dq}$ appliquées sur les deux axes respectivement direct d et en quadrature q du plan de Park de la machine sont fournies en entrée du second estimateur de flux 40, qui est basé sur le modèle de courant, modifié avec l'observateur.

La vitesse de rotation du rotor $\omega_e$ est également fournie en entrée de ce second estimateur de flux 40.

Après avoir estimé les deux variables $g_1$ et $g_2$ à l'aide de l'observateur, comme expliqué précédemment, le second estimateur de flux 40 fournit en sortie les composantes estimées $\hat{\lambda}_{dq}$, respectivement directe d et en quadrature q, du flux total dans le plan de Park, par application de l'ensemble d'équation (11) décrit ci-dessus.

Ces composantes sont transformées par l'utilisation de la transformée de Park inverse 42, qui effectue la rotation du repère (d,q) au repère ($\alpha,\beta$), en fonction de la position du rotor $\theta_e$ par rapport au stator. La transformée de Park inverse 42 fournit donc en sortie les composantes $\hat{\lambda}_{\alpha\beta}$ du flux total dans le repère diphasé $\alpha,\beta$, estimées à partir du modèle flux-courant de la machine, accompagné avec l'observateur pour tenir compte des incertitudes magnétiques du modèle flux-courant de la machine.

Aussi, lorsque le second estimateur de flux 40, basé sur le modèle flux-courant est activé en fonction du signal RES pour réinitialiser les deux intégrateurs 103 du premier estimateur 10 basé sur le modèle flux-tension, ces composantes sont fournies aux deux intégrateurs 103 pour réinitialiser les conditions initiales $\hat{\lambda}_\alpha(0)$ et $\hat{\lambda}_\beta(0)$ des intégrateurs.

Le dispositif de la figure 1 comprend également un circuit de surveillance 50, destiné à mesurer la durée d'activation du second estimateur 40 avec l'observateur, à travers la variable OT décrite précédemment.

Enfin, le dispositif de la figure 1 décrit également un circuit 60 d'estimation de l'offset de la force électromotrice, qui fournit en sortie la valeur $e_{\alpha\beta\text{-offset}}$ déterminée selon les principes exposés plus haut. Cette valeur d'offset est fournie au sommateur 102 pour être soustraite de la force électromotrice calculée en sortie du sommateur 102.

Le couple de la machine peut ainsi être estimé de façon précise et robuste, même sans connaissance des conditions magnétiques initiales et en tenant compte de toutes les variations des paramètres magnétiques pendant le fonctionnement de la machine.

**Revendications**

1. Procédé d'estimation du couple électromagnétique d'une machine électrique synchrone triphasée à aimants permanents pour véhicule automobile électrique ou hybride, comprenant des étapes de :

   - mesurer les courants et tensions au niveau des phases du stator de la machine dans un repère triphasé fixe lié au stator,
   - déterminer les courants et tensions ($i_{\alpha\beta}$, $v_{\alpha\beta}$) dans un repère diphasé fixe lié au stator en fonction des mesures de courant et de tension dans le repère triphasé,
   - calculer une première estimation du flux ($\hat{\lambda}_{\alpha\beta}$) de la machine par le calcul de l'intégrale de la force électromotrice, la force électromotrice étant calculée à partir des tensions et courants exprimés dans le repère diphasé fixe lié au stator,

- estimer le couple électromagnétique ($\hat{T}_e$) à partir du flux estimé par la première estimation,

ledit procédé étant **caractérisé en ce qu'**il comprend des étapes de :

- déterminer les courants et tensions ($i_{dq}$, $v_{dq}$) dans un repère diphasé tournant lié au rotor en fonction des courants et tensions ($i_{\alpha\beta}$, $v_{\alpha\beta}$) exprimés dans le repère diphasé fixe et de la position du rotor ($\theta_e$) par rapport au stator,
- calculer en parallèle une seconde estimation du flux de la machine ($\hat{\lambda}_{\alpha\beta}$) en utilisant les courants exprimés dans le repère diphasé tournant lié au rotor, ladite seconde estimation de flux étant corrigée par l'introduction de variables caractérisant des incertitudes magnétiques de la machine, lesdites variables étant déterminées par un observateur fonction des courants et des tensions statoriques ($i_{dq}$, $v_{dq}$) exprimés dans le repère diphasé tournant lié au rotor,
- comparer le couple estimé ($\hat{T}_e$) à partir du flux estimé par la première estimation et un couple de consigne ($T^*_e$) et
- réinitialiser des conditions initiales du flux selon la première estimation à partir du flux estimé par la seconde estimation lorsque l'écart entre le couple estimé à partir du flux estimé par la première estimation et le couple de consigne dépasse un seuil prédéfini ($\varepsilon$).

2. Procédé selon la revendication 1, **caractérisé en ce qu'**il comprend une étape de désactiver le calcul de ladite seconde estimation de flux lorsque l'écart entre le couple estimé à partir du flux estimé par la première estimation et le couple de consigne est inférieur ou égal audit seuil.

3. Procédé selon la revendication 2, **caractérisé en ce qu'**il comprend une étape de déterminer un pourcentage de temps pendant lequel le calcul de ladite seconde estimation de flux est activé par rapport au temps de fonctionnement de la machine.

4. Procédé selon l'une quelconque des revendications précédentes, **caractérisé en ce qu'**il comprend une étape de compenser un décalage de la force électromotrice calculée avant son utilisation dans ladite première estimation du flux.

5. Procédé selon l'une quelconque des revendications précédentes, **caractérisé en ce que** ladite seconde estimation du flux de la machine comprend des étapes de :

- déterminer un modèle flux-courant de la machine, prenant en compte des fonctions de saturation de la machine, de façon à considérer dans le modèle des variations de paramètres magnétiques de la machine causées par la saturation magnétique et la démagnétisation de la machine,
- introduire dans le modèle lesdites variables caractérisant les incertitudes magnétiques de la machine, inhérentes aux variations des paramètres magnétiques de la machine,
- estimer lesdites variables dans le modèle par ledit observateur,
- calculer ladite seconde estimation du flux à partir desdites variables estimées.

6. Procédé selon la revendication 5, **caractérisé en ce que** les paramètres magnétiques considérés sont les inductances linéaires du stator sur chaque axe respectivement du repère diphasé tournant lié au rotor et le flux magnétique généré par les aimants permanents du rotor de la machine.

7. Procédé selon la revendication 5 ou 6, **caractérisé en ce que** les fonctions de saturation représentent la saturation magnétique et la saturation croisée dans la machine.

8. Procédé selon l'une quelconque des revendications précédentes, **caractérisé en ce qu'**il comprend une étape de régler l'observateur par un algorithme de type Kalman.

9. Dispositif d'estimation du couple électromagnétique d'une machine électrique synchrone triphasée à aimants permanents pour un véhicule automobile électrique ou hybride, ledit dispositif étant adapté pour recevoir des courants et tensions mesurés au niveau des phases du stator de la machine dans un repère triphasé fixe lié au stator, transformés dans un repère diphasé fixe lié au stator, ledit dispositif comprenant :

un premier estimateur (10) du flux de la machine dans le repère diphasé fixe lié au stator, comprenant deux intégrateur (103) de la force électromotrice pour estimer les composantes respectives ($\hat{\lambda}_{\alpha\beta}$) du flux selon les deux axes direct et en quadrature du repère diphasé fixe lié au stator, ladite force électromotrice étant calculée à partir des courants et tensions ($i_{\alpha\beta}$, $v_{\alpha\beta}$) appliqués sur chaque axe du repère diphasé fixe lié au stator,
un estimateur de couple (20), adapté pour estimer le couple ($\hat{T}_e$) de la machine à partir desdites composantes respectives ($\hat{\lambda}_{\alpha\beta}$) du flux estimé dans les deux axes du repère diphasé fixe lié au stator,
ledit dispositif étant **caractérisé en ce qu'**il comprend :

un second estimateur (40) du flux, adapté pour recevoir les courants et tensions ($i_{\alpha\beta}$, $v_{\alpha\beta}$) exprimés dans le repère diphasé fixe, transformés dans un repère diphasé tournant lié au rotor en fonction de la position du rotor ($\theta_e$) par rapport au stator, ledit second estimateur de flux (40) étant adapté pour estimer le flux en utilisant les courants ($i_{dq}$) exprimés dans le repère diphasé tournant lié au rotor, ledit second estimateur (40) comprenant un observateur fonction des courants et des tensions statoriques ($i_{dq}$, $v_{dq}$) exprimés dans le repère diphasé tournant lié au rotor, adapté pour déterminer des variables caractérisant des incertitudes magnétiques de la machine, lesdites variables étant utilisées pour corriger l'estimation de flux dudit second estimateur (40), et
un détecteur (30) adapté pour comparer le couple estimé ($\hat{T}_e$) par l'estimateur de couple (20) à partir desdites composantes respectives ($\lambda_{\alpha\beta}$) du flux estimé dans les deux axes du repère diphasé fixe lié au stator, avec un couple de consigne ($T^*_e$) et pour générer un signal (RES) apte à commander la réinitialisation des conditions initiales du flux des deux intégrateurs (103) dudit premier estimateur (10) de flux, lorsque l'écart entre le couple estimé et le couple de consigne est supérieur à un seuil prédéfini ($\varepsilon$), lesdites conditions initiales étant réinitialisées à partir de l'estimation de flux fournie par le second estimateur de flux (40).

10. Dispositif selon la revendication 9, **caractérisé en ce que** ledit signal (RES) est apte à désactiver le calcul de ladite seconde estimation de flux par le second estimateur de flux (40), lorsque l'écart entre le couple estimé et le couple de consigne est inférieur ou égal audit seuil.

## Patentansprüche

1. Verfahren zur Schätzung des elektromagnetischen Drehmoments einer elektrischen Drehstrom-Synchronmaschine mit Dauermagneten für ein Elektro- oder Hybrid-Kraftfahrzeug, das folgende Schritte enthält:

- Messen der Ströme und Spannungen im Bereich der Phasen des Stators der Maschine in einem mit dem Stator verbundenen ortsfesten dreiphasigen Bezugssystem,
- Bestimmen der Ströme und Spannungen ($i_{\alpha\beta}$, $v_{\alpha\beta}$) in einem mit dem Stator verbundenen ortsfesten zweiphasigen Bezugssystem abhängig von den Strom- und Spannungsmessungen im dreiphasigen Bezugssystem,
- Berechnen einer ersten Schätzung der Flüsse ($\hat{\lambda}_{\alpha\beta}$) der Maschine durch die Berechnung des Integrals der elektromotorischen Kraft, wobei die elektromotorische Kraft ausgehend von den Spannungen und Strömen berechnet wird, die im mit dem Stator verbundenen ortsfesten zweiphasigen Bezugssystem ausgedrückt werden,
- Schätzen des elektromagnetischen Drehmoments ($\hat{T}_e$) ausgehend vom durch die erste Schätzung geschätzten Fluss,

wobei das Verfahren **dadurch gekennzeichnet ist, dass** es folgende Schritte enthält:

- Bestimmen der Ströme und Spannungen (($i_{dq}$, $v_{dq}$) in einem mit dem Rotor verbundenen drehenden zweiphasigen Bezugssystem abhängig von den im ortsfesten zweiphasigen Bezugssystem ausgedrückten Strömen und Spannungen ($i_{\alpha\beta}$, $v_{\alpha\beta}$) und von der Position des Rotors ($\theta_e$) bezüglich des Stators,
- paralleles Berechnen einer zweiten Schätzung des Flusses der Maschine ($\hat{\lambda}_{\alpha\beta}$) unter Verwendung der im mit dem Rotor verbundenen drehenden zweiphasigen Bezugssystem ausgedrückten Ströme, wobei die zweite Flussschätzung durch die Einführung von Variablen korrigiert wird, die magnetische Unsicherheiten der Maschine kennzeichnen, wobei die Variablen von einem Beobachter abhängig von den im mit dem Rotor verbundenen drehenden zweiphasigen Bezugssystem ausgedrückten Statorströmen und -spannungen ($i_{dq}$, $v_{dq}$) bestimmt werden,
- Vergleichen des ausgehend vom durch die erste Schätzung geschätzten Fluss geschätzten Drehmoments ($\hat{T}_e$) und eines Solldrehmoments ($T^*_e$) und
- Zurücksetzen von Anfangsbedingungen des Flusses gemäß der ersten Schätzung ausgehend vom durch die zweite Schätzung geschätzten Fluss, wenn die Abweichung zwischen dem ausgehend vom durch die erste Schätzung geschätzten Fluss geschätzten Drehmoment und dem Solldrehmoment eine vordefinierte Schwelle ($\varepsilon$) überschreitet.

2. Verfahren nach Anspruch 1, **dadurch gekennzeichnet, dass** es einen Schritt der Deaktivierung der Berechnung der zweiten Flussschätzung enthält, wenn die Abweichung zwischen dem ausgehend vom durch die erste Schätzung geschätzten Fluss geschätzten Drehmoment und dem Solldrehmoment niedriger als die oder gleich der Schwelle ist.

3. Verfahren nach Anspruch 2, **dadurch gekennzeichnet, dass** es einen Schritt der Bestimmung eines Zeitprozents enthält, während dessen die Berechnung der zweiten Flussschätzung bezüglich der Betriebszeit der Maschine aktiviert wird.

4. Verfahren nach einem der vorhergehenden Ansprüche, **dadurch gekennzeichnet, dass** es einen Schritt des Kompensierens einer Diskrepanz der elektromotorischen Kraft enthält, die vor ihrer Verwendung in der ersten Schätzung des Flusses berechnet wird.

5. Verfahren nach einem der vorhergehenden Ansprüche, **dadurch gekennzeichnet, dass** die zweite Schätzung des Flusses der Maschine folgende Schritte enthält:

   - Bestimmen eines Fluss-Strom-Modells der Maschine, unter Berücksichtigung der Sättigungsfunktionen der Maschine, um im Modell Änderungen magnetischer Parameter der Maschine zu berücksichtigen, die durch die magnetische Sättigung und durch die Entmagnetisierung der Maschine verursacht werden,
   - Einführen der Variablen in das Modell, die die magnetischen Unsicherheiten der Maschine kennzeichnen, die den Änderungen der magnetischen Parameter der Maschine inhärent sind,
   - Schätzen der Variablen im Modell durch den Beobachter,
   - Berechnen der zweiten Schätzung des Flusses ausgehend von den geschätzten Variablen.

6. Verfahren nach Anspruch 5, **dadurch gekennzeichnet, dass** die berücksichtigten magnetischen Parameter die linearen Induktivitäten des Stators auf jeder Achse des mit dem Rotor verbundenen drehenden zweiphasigen Bezugssystems und der magnetische Fluss sind, der von den Dauermagneten des Rotors der Maschine erzeugt wird.

7. Verfahren nach Anspruch 5 oder 6, **dadurch gekennzeichnet, dass** die Sättigungsfunktionen die magnetische Sättigung und die Kreuzsättigung in der Maschine darstellen.

8. Verfahren nach einem der vorhergehenden Ansprüche, **dadurch gekennzeichnet, dass** es einen Schritt der Einstellung des Beobachters durch einen Algorithmus vom Typ Kalman enthält.

9. Schätzvorrichtung des elektromagnetischen Drehmoments einer elektrischen Drehstrom-Synchronmaschine mit Dauermagneten für ein Elektro- oder Hybrid-Kraftfahrzeug, wobei die Vorrichtung geeignet ist, Ströme und Spannungen zu empfangen, die im Bereich der Phasen des Stators der Maschine in einem mit dem Stator verbundenen ortsfesten dreiphasigen Bezugssystem gemessen werden, die in ein mit dem Stator verbundenes ortsfestes zweiphasiges Bezugssystem umgewandelt werden, wobei die Vorrichtung enthält:

   einen ersten Schätzer (10) des Flusses der Maschine im mit dem Stator verbundenen ortsfesten zweiphasigen Bezugssystem, der zwei Integratoren (103) der elektromotorischen Kraft enthält, um die jeweiligen Komponenten ($\hat{\lambda}_{\alpha\beta}$) des Flusses gemäß den zwei direkten und Quadratur-Achsen des mit dem Stator verbundenen ortsfesten zweiphasigen Bezugssystems zu schätzen, wobei die elektromotorische Kraft ausgehend von den Strömen und Spannungen ($i_{\alpha\beta}$, $v_{\alpha\beta}$) berechnet wird, die auf jede Achse des mit dem Stator verbundenen ortsfesten zweiphasigen Bezugssystems angewendet werden,
   einen Drehmomentschätzer (20), der geeignet ist, das Drehmoment ($\hat{T}_e$) der Maschine ausgehend von den jeweiligen Komponenten ($\hat{\lambda}_{\alpha\beta}$) des geschätzten Flusses in den zwei Achsen des mit dem Stator verbundenen ortsfesten zweiphasigen Bezugssystems zu schätzen,
   wobei die Vorrichtung **dadurch gekennzeichnet ist, dass** sie enthält:

   einen zweiten Schätzer (40) des Flusses, der geeignet ist, die im ortsfesten zweiphasigen Bezugssystem ausgedrückten Ströme und Spannungen ($i_{\alpha\beta}$, $v_{\alpha\beta}$) zu empfangen, die in ein mit dem Rotor verbundenes drehendes zweiphasiges Bezugssystem abhängig von der Position des Rotors ($\theta_e$) bezüglich des Stators umgewandelt werden, wobei der zweite Flussschätzer (40) geeignet ist, den Fluss unter Verwendung der im mit dem Rotor verbundenen drehenden zweiphasigen Bezugssystem ausgedrückten Ströme ($i_{dq}$) zu schätzen, wobei der zweite Schätzer (40) einen Beobachter abhängig von den im mit dem Rotor verbundenen drehenden zweiphasigen Bezugssystem ausgedrückten Statorströmen und -spannungen ($i_{dq}$, $v_{dq}$) enthält, der geeignet ist, Variable zu bestimmen, die magnetische Unsicherheiten der Maschine kennzeichnen, wobei die Variablen verwendet werden, um die Flussschätzung des zweiten Schätzers (40) zu korrigieren, und

einen Detektor (30), der geeignet ist, das durch den Drehmomentschätzer (20) ausgehend von den jeweiligen Komponenten ($\hat{\lambda}_{\alpha\beta}$) des geschätzten Flusses in den zwei Achsen des mit dem Stator verbundenen ortsfesten zweiphasigen Bezugssystems geschätzte Drehmoment ($\hat{T}_e$) mit einem Solldrehmoment ($T^*_e$) zu vergleichen und um ein Signal (RES) zu erzeugen, das fähig ist, die Zurücksetzung der Anfangsbedingungen des Flusses der zwei Integratoren (103) des ersten Flussschätzers (10) zu steuern, wenn die Abweichung zwischen dem geschätzten Drehmoment und dem Solldrehmoment größer ist als eine vordefinierte Schwelle ($\varepsilon$), wobei die Anfangsbedingungen ausgehend von der Flussschätzung rückgestellt werden, die vom zweiten Flussschätzer (40) geliefert wird.

10. Vorrichtung nach Anspruch 9, **dadurch gekennzeichnet, dass** das Signal (RES) fähig ist, die Berechnung der zweiten Flussschätzung durch den zweiten Flussschätzer (40) zu deaktivieren, wenn die Abweichung zwischen dem geschätzten Drehmoment und dem Solldrehmoment geringer als die oder gleich der Schwelle ist.

## Claims

1. Method for estimating the electromagnetic torque of a permanent-magnet three-phase synchronous electric machine for an electric or hybrid motor vehicle, comprising steps of:

   - measuring the currents and voltages on the phases of the stator of the machine in a fixed three-phase reference system tied to the stator,
   - determining the currents and voltages ($i_{\alpha\beta}$, $v_{\alpha\beta}$) in a fixed two-phase reference system tied to the stator as a function of the current and voltage measurements in the three-phase reference system,
   - calculating a first estimate of the flux ($\hat{\lambda}_{\alpha\beta}$) of the machine by calculating the integral of the electromotive force, the electromotive force being calculated based on the voltages and currents expressed in the fixed two-phase reference system tied to the stator,
   - estimating the electromagnetic torque ($\hat{T}_e$) based on the flux estimated by the first estimate,

   said method being **characterized in that** it comprises steps of:

   - determining the currents and voltages ($i_{dq}$, $v_{dq}$) in a rotating two-phase reference system tied to the rotor as a function of the currents and voltages ($i_{\alpha\beta}$, $v_{\alpha\beta}$) expressed in the fixed two-phase reference system and the position of the rotor ($\theta_e$) with respect to the stator,
   - calculating, in parallel, a second estimate of the flux of the machine ($\hat{\lambda}_{\alpha\beta}$) using the currents expressed in the rotating two-phase reference system tied to the rotor, said second flux estimate being corrected by introducing variables characterizing magnetic uncertainties of the machine, said variables being determined by an observer based on the stator currents and voltages ($i_{dq}$, $v_{dq}$) expressed in the rotating two-phase reference system tied to the rotor,
   - comparing the torque ($\hat{T}_e$) estimated based on the flux estimated by the first estimate and a setpoint torque ($T^*_e$) and
   - resetting the initial conditions of the flux in line with the first estimate based on the flux estimated by the second estimate when the difference between the torque estimated based on the flux estimated by the first estimate and the setpoint torque exceeds a predefined threshold ($\varepsilon$).

2. Method according to Claim 1, **characterized in that** it comprises a step of deactivating the calculation of said second flux estimate when the difference between the torque estimated based on the flux estimated by the first estimate and the setpoint torque is less than or equal to said threshold.

3. Method according to Claim 2, **characterized in that** it comprises a step of determining a percentage of time for which the calculation of said second flux estimate is activated with respect to the operating time of the machine.

4. Method according to any one of the preceding claims, **characterized in that** it comprises a step of compensating for an offset of the calculated electromotive force before it is used in said first flux estimate.

5. Method according to any one of the preceding claims, **characterized in that** said second estimate of the flux of the machine comprises steps of:

- determining a flux-current model of the machine, taking into account saturation functions of the machine, so as to consider, in the model, variations in magnetic parameters of the machine caused by the magnetic saturation and the demagnetization of the machine,
- introducing, into the model, said variables characterizing the magnetic uncertainties of the machine, inherent to the variations in the magnetic parameters of the machine,
- estimating said variables in the model, performed by said observer,
- calculating said second flux estimate based on said estimated variables.

6. Method according to Claim 5, **characterized in that** the magnetic parameters under consideration are the linear inductances of the stator on each axis, respectively, of the rotating two-phase reference system tied to the rotor and the magnetic flux generated by the permanent magnets of the rotor of the machine.

7. Method according to Claim 5 or 6, **characterized in that** the saturation functions represent magnetic saturation and cross-saturation in the machine.

8. Method according to any one of the preceding claims, **characterized in that** it comprises a step of adjusting the observer using a Kalman algorithm.

9. Device for estimating the electromagnetic torque of a permanent-magnet three-phase synchronous electric machine for an electric or hybrid motor vehicle, said device being designed to receive currents and voltages measured on the phases of the stator of the machine in a fixed three-phase reference system tied to the stator, transformed into a fixed two-phase reference system tied to the stator, said device comprising:

a first flux estimator (10) for estimating the flux of the machine in the fixed two-phase reference system tied to the stator, comprising two electromotive force integrators (103) for estimating the respective components ($\hat{\lambda}_{\alpha\beta}$) of the flux along the two direct and quadrature axes of the fixed two-phase reference system tied to the stator, said electromotive force being calculated based on the currents and voltages ($i_{\alpha\beta}$, $v_{\alpha\beta}$) applied to each axis of the fixed two-phase reference system tied to the stator,
a torque estimator (20), designed to estimate the torque ($\hat{T}_e$) of the machine based on said respective components ($\hat{\lambda}_{\alpha\beta}$) of the flux estimated in the two axes of the fixed two-phase reference system tied to the stator,
said device being **characterized in that** it comprises:

a second flux estimator (40), designed to receive the currents and voltages ($i_{\alpha\beta}$, $v_{\alpha\beta}$) expressed in the fixed two-phase reference system, transformed into a rotating two-phase reference system tied to the rotor as a function of the position of the rotor ($\theta_e$) with respect to the stator, said second flux estimator (40) being designed to estimate the flux using the currents ($i_{dq}$) expressed in the rotating two-phase reference system tied to the rotor, said second estimator (40) comprising an observer based on the stator currents and voltages ($i_{dq}$, $v_{dq}$) expressed in the rotating two-phase reference system tied to the rotor, designed to determine variables characterizing magnetic uncertainties of the machine, said variables being used to correct the flux estimate of said second estimator (40), and
a detector (30) designed to compare the torque ($\hat{T}_e$) estimated by the torque estimator (20) based on said respective components ($\hat{\lambda}_{\alpha\beta}$) of the flux estimated in the two axes of the fixed two-phase reference system tied to the stator with a setpoint torque ($T^*_e$) and to generate a signal (RES) able to command resetting of the initial conditions of the flux of the two integrators (103) of said first flux estimator (10), when the difference between the estimated torque and the setpoint torque is greater than a predefined threshold ($\varepsilon$), said initial conditions being reset based on the flux estimate supplied by the second flux estimator (40).

10. Device according to Claim 9, **characterized in that** said signal (RES) is able to deactivate the calculation of said second flux estimate by the second flux estimator (40) when the difference between the estimated torque and the setpoint torque is less than or equal to said threshold.

Fig.1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9985564 B2
- CN 103346726 A
- US 7098623 B2
- EP 1513250 A
- US 7774148 B2
- CN 103872951 A
- JP 2004166408 A

**Littérature non-brevet citée dans la description**

- Improvement of stator flux observer for a direct torque controlled PMSM drive at low speed. **CHEN WEI et al.** POWER ELECTRONICS AND MOTION CONTROL CONFERENCE (IPEMC), 2012 7TH INTERNATIONAL. IEEE, 02 Juin 2012, 2462-2466